# EUROPEAN PATENT SPECIFICATION

(11) **EP 4 420 871 B1**
(45) Date of publication and mention of the grant of the patent: **22.10.2025**
(21) Application number: 24158781.5
(22) Date of filing: 21.02.2024
(51) Int. Cl.: B32B 1/08, B32B 3/08, B32B 3/30, B32B 27/08, B32B 27/32, B32B 27/34, F16L 9/19, F16L 11/12, F16L 11/20, F16L 59/147

(54) **PIPELINE WITH LONGITUDINAL CHANNELS FOR A FLUID TO BE TRANSPORTED, IN PARTICULAR IN A MOTOR VEHICLE**
ROHRLEITUNG MIT LÄNGSKANALEN FÜR EIN ZU TRANSPORTIERENDES FLUID, INSBESONDERE IN EINEM KRAFTFAHRZEUG
CANALISATION À CANAUX LONGITUDIAUX POUR UN FLUIDE À TRANSPORTER, EN PARTICULIER DANS UN VÉHICULE AUTOMOBILE

(30) Priority: 23.02.2023 IT 202300003114
(43) Date of publication of application: 28.08.2024
(73) Proprietor: HUTCHINSON S.r.l., 10090 Rivoli (TO) (IT)
(72) Inventor: PASTENA, Davide, 10139 TORINO (IT)
(74) Representative: Vitillo, Giuseppe

(56) References cited:
- CN-A- 102 588 710
- CN-A- 107 573 573

## Description

### Technical field

The present invention relates to a pipeline for a fluid to be transported, in particular in a motor vehicle.

### Technical background

Particularly in the automotive field, pipelines are known which are used for transporting a fluid, e.g. in selective catalytic reduction (SCR) systems.

According to the prior art, such a pipeline comprises an inner pipe, configured to be crossed by a fluid to be transported, and an outer pipe, which surrounds the inner pipe, thus forming a coating sheath. Such a pipeline is described, for example, in document EP 2 666 985, wherein the coating sheath comprises a plurality of internal grooves. In addition, in said document the pipeline is equipped with a device for heating the transported fluid, in particular a heating resistor wire applied to the inner pipe. One drawback lies in the fact that the walls that define the groove will tend to collapse while manufacturing the pipeline, in particular during the thermoforming process. Moreover, the resistor wires may, since the sheath is not in close contact with them, move from their initial position and create uneven heating conditions.

US 6116290 concerns a pipe insulation system wherein between an outer pipe and an inner pipe there are mutually adjacent circular channels. One drawback of such a system lies in the fact that the excessive number of channels results in higher production costs, particularly in the variant wherein such channels are buried in insulating material. Moreover, the production process is not efficient.

CN 102588710 concerns a pipe insulation system wherein between an outer pipe and an inner pipe there are mutually adjacent circular channels. One drawback of such a system lies in the fact that the excessive number of channels, the use of adhesive for joining them, and the vacuum sealing of the channels result in higher production costs. Moreover, the production process is not efficient.

CN 107573573 A concerns a pipe insulation system wherein between an outer pipe and an inner pipe there are radial protrusions belonging to the outer pipe. One drawback of such a system lies in the fact that the radial protrusions are solid, thus permitting heat transfer. Moreover, the radial protrusions, especially when they are thin, are at risk of collapsing when the pipe is bent, thus jeopardizing the insulation.

EP 2094481 B1 concerns an insulation system for pipes for cold substances, wherein between an outer pipe and an inner pipe there are circular channels which are mutually spaced apart. One drawback of such a system lies in the fact that such a system is not applicable to vehicles, and that the presence of a third pipe results in higher production costs. Moreover, the production process is not efficient.

### Summary of the invention

It is one object of the present invention to provide a pipeline which can overcome the drawbacks of the prior art.

According to the present invention, this object is achieved through a pipeline having the technical features set out in the appended independent claim.

In particular, such features result in a pipeline with improved mechanical strength, which will maintain its insulating properties even after having been bent.

Another advantage lies in the fact that the pipeline can be manufactured easily, quickly and economically, while ensuring good thermal insulation.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figure 1 is a perspective view of a pipeline made in accordance with an exemplary embodiment of the present invention.
Figure 2 is a cross-sectional view of the pipeline shown in Figure 1.
Figure 3 is a perspective view of a longitudinal section of the pipeline shown in Figure 1.
Figure 4 is a cross-sectional view of a pipeline made in accordance with an alternative embodiment of the present invention.
Figure 5 is a cross-sectional view of a pipeline made in accordance with another alternative embodiment of the present invention.
Figure 6 is a partial perspective view (wherein the outer pipe is not shown) of a pipeline wherein the tubular portions are arranged in a spiral fashion, according to a particular embodiment thereof.
Figure 7 is a cross-sectional view of the pipeline shown in Figure 6, showing also the outer pipe.
Figure 8 is a partial longitudinal sectional view (wherein the inner pipe is not shown) of the pipeline shown in Figures 6 and 7.
Figure 9 is a partial perspective view (wherein the outer pipe is not shown) of a pipeline wherein the tubular portions are arranged in a spiral fashion, according to a different embodiment thereof.
Figure 10 is a cross-sectional view of the pipeline shown in Figure 9, showing also the outer pipe.
Figure 11 is a partial longitudinal sectional view (wherein the inner pipe is not shown) of the pipeline shown in Figures 9 and 10.

### Detailed description of the invention

With reference to the drawings, numeral 10 designates as a whole a pipeline for a fluid to be transported, which is made in accordance with an exemplary embodiment of the present invention.

For example, pipeline 10 can be used in a motor vehicle. In particular, pipeline 10 may find application in a selective catalytic reduction (SCR) system, a battery cooling system, or a water injection system.

Pipeline 10 comprises an inner pipe 12 configured to be crossed by the fluid to be transported. Furthermore, pipeline 10 includes a sheath 15 comprising:
- an outer pipe 14, and
- a plurality of tubular portions 18 defining channels 16. Tubular portions 18: are radially interposed between inner pipe 12 and outer pipe 14, extend longitudinally along said outer pipe 14, are made as one piece with outer pipe 14, and are mutually spaced apart, thus forming interspaces 17.

In particular, channels 16 have a circular cross-section.

In particular, interspaces 17 are radially interposed between inner pipe 12 and outer pipe 14.

In more detail, interspaces 17 and channels 16 alternate in a circumferential position.

Sheath 15 comprises a plurality of tubular portions 18, each one of which defines a respective channel 16. Tubular portion 18 has, therefore, an inner surface defining channel 16, and an outer surface facing towards, in particular touching, inner pipe 12. Sheath 15 and tubular portions 18 are made as one piece, in particular by extrusion.

In particular, the cross-section of channels 16 is circular. Circular tubular portions 18 offer the advantage of reducing to a minimum the contact, and the resulting thermal exchange, between inner pipe 12 and outer pipe 14, while at the same time ensuring good structural strength because such tubular portions 18 make it possible to bend sheath 15 without channels 16 collapsing. Since channels 16 will not collapse, the internal cavity will remain intact and the thermal insulation provided by the gas contained in such cavities will still be efficient. Moreover, the circular shape of tubular portion 18 minimizes the contact area (in particular, in a cross-sectional view) between tubular portion 18 itself and inner pipe 12, thereby ensuring good thermal insulation. In more detail, tubular portions 18 are in contact with said inner pipe 12.

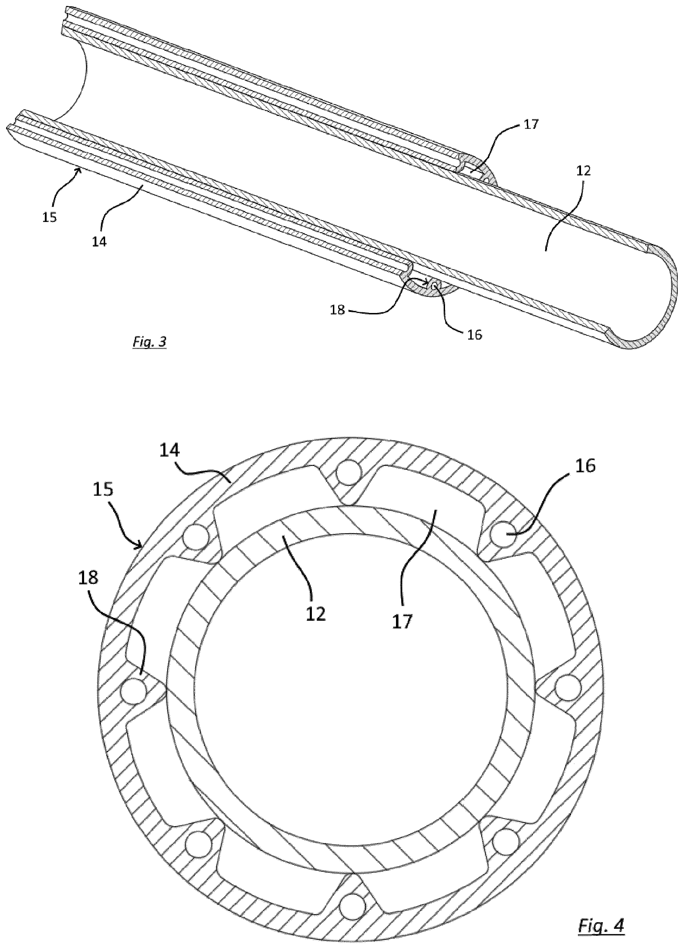

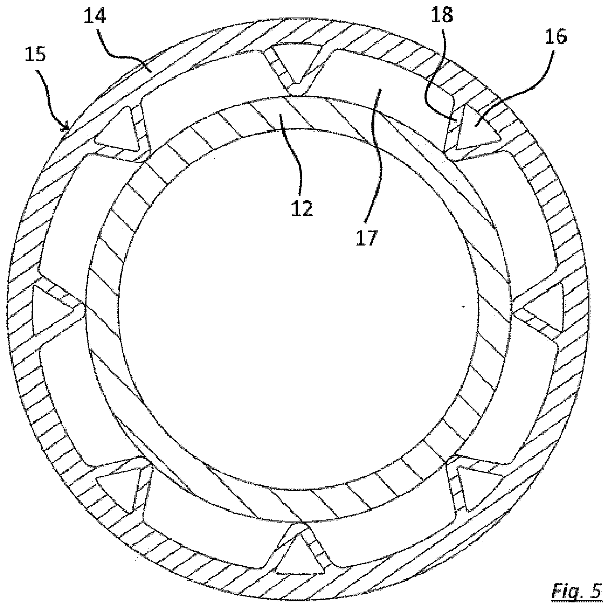

The contact area between tubular portions 18 and inner pipe 12 can also be minimized through the use of tubular portions 18 having a cross-section other than circular. For example, tubular portions 18 may have a substantially triangular outer surface, as shown in Figs. 4 and 5. Such triangles defining channels 16 have one corner or vertex touching inner pipe 12. According to some possible variants, the outer and inner surfaces of tubular portion 18 may have different cross-sections. For example, the shape of the outer surface of tubular portion 18 may be substantially triangular, while the shape of the inner surface, and hence that of channel 16, may be circular, as shown in Fig. 4. In Fig. 5, on the contrary, also channels 16 have a triangular cross-section. In such variants as well, sheath 15 provides good flexural strength.

Regions of thermal insulation around inner pipe 12 are also created by interspaces 17, defined by the circumferential space between tubular portions 18. Spaced-apart channels 16 give the advantage of reducing the production cost and weight of sheath 15 (since it is not necessary to form many channels 16 in mutual contact), while ensuring good thermal insulation due to the presence of numerous empty spaces (i.e. interspaces 17 and channels 16).

A further advantage offered by the invention is the possibility of avoiding the application of insulating foam on the outside pipeline 10, which would prevent the use of clamps or other fastening means. Moreover, foam has poor abrasion resistance. The pipeline of the invention, with the outer pipe made of relatively stiff and solid material, is resistant to abrasion and can be mounted to other components of a vehicle through suitable fastening means.

Preferably, channels 16 and interspaces 17 contain gas, conveniently air. The gas or air performs a thermal insulation function. Air offers good thermal insulation, and makes the production process both simple and economical.

Preferably, in a cross-sectional view, width L of interspaces 17 is greater than diameter d of channels 16. In more detail, width L, which is the distance between the outer surfaces of two adjacent tubular portions 18, is greater than diameter d of channels 16. The diameter d of channel 16 is defined by the inner surface of tubular portion 18. In other words, L>d. It is thus possible to have a limited number of channels 16, thus ensuring good thermal insulation combined with low production costs and satisfactory mechanical strength. In the example, all channels 16, all tubular portions 18 and all interspaces 17 have the same shape and size. In particular, width L of interspaces 17 is greater than width D of the outer surface of tubular portion 18. In more detail, width L, which is the distance between the outer surfaces of tubular portions 18 of two adjacent channels 16, is greater than outside diameter D defined by the outer surfaces of tubular portions 18 of a channel 16. In other words, L>D.

In the example, channels 16 are arranged substantially circumferentially around inner pipe 12. In particular, channels 16 are equally spaced apart angularly from each other. In particular, pipes 12 and 14 have a circular cross-section. In the example, the outer surface of outer pipe 14 is substantially smooth.

Optionally, channels 16 may be closed at their axial (i.e. longitudinal) ends. As an alternative, the ends of channels 16 are open.

In particular, sheath 15 is made by extrusion around inner pipe 12. In other words, sheath 15 is directly fabricated by extrusion around inner pipe 12 in a continuous process, thus avoiding the need for fitting sheath 15 over inner pipe 12 at a later time, which would imply higher costs and longer production times.

In particular, channels 16 are situated in a radially internal position relative to outer pipe 14. Such channels 16 are radially interposed between outer pipe 14 and inner pipe 12. In more detail, tubular portions 18, which define channels 16, touch the outer surface of inner pipe 12.

According to an illustrative embodiment of the present invention, sheath 15 is made of polymeric material, e.g. an elastomer, in particular a thermoplastic elastomer, more specifically a vulcanized thermoplastic elastomer, or TPV. Conveniently, inner pipe 12 is also made of polymeric material, which may be either the same material as the one used for sheath 15 or, alternatively, a different material. For example, inner pipe 12 may be made of polyamide or polyolefin.

As aforementioned, pipeline 10 can be used in a fluid carrier system.

According to an illustrative embodiment of the present invention, the fluid carrier system comprises pipeline 10 and a fluid source configured to supply a fluid to be transported. Such fluid source is connected to inner pipe 12 of pipeline 10.

As aforementioned, pipeline 10 is so versatile that it can be used in different system types.

According to an exemplary embodiment of the present invention, channels 16 may be closed at their axial ends, for the purpose of providing thermal insulation of the fluid to be transported, which flows through inner pipe 12. In this case, the fluid acting as thermal insulator is, preferably, air.

According to an alternative exemplary embodiment, the pipeline is associated with a fluid circulation system, e.g. for a gas or a liquid, configured to supply an auxiliary fluid and connected to the axial ends of channels 16 and/or of interspaces 17 in order to provide fluid circulation. Preferably, the axial ends of channels 16 and/or of interspaces 17 are open to allow the auxiliary fluid to circulate through them. The selected auxiliary fluid must have such properties as to provide heating or insulation of the fluid being transported through inner pipe 12. Therefore, it is possible to adapt the thermal functionality of pipeline 10 based on the desired performance of the system where it is to be installed. According to a possible variant, channels 16 and/or interspaces 17 are filled with a fluid, e.g. a gas or a liquid, which remains in a static condition, i.e. not in circulation.

According to an exemplary embodiment, the system may be configured for cooling the batteries of an electric or hybrid vehicle, wherein the fluid to be transported is typically a solution of water and glycol, and the auxiliary fluid may be the air contained in channels 16 and in interspaces 17. Alternatively, the system may be configured for selective catalytic reduction, or SCR, wherein the fluid to be transported is typically a solution of urea, and the auxiliary fluid may be the air contained in channels 16. In this manner, the urea solution can be heated effectively through the combined effect of the heating device and of the thermal insulation provided by the air contained in channels 16 and in interspaces 17.

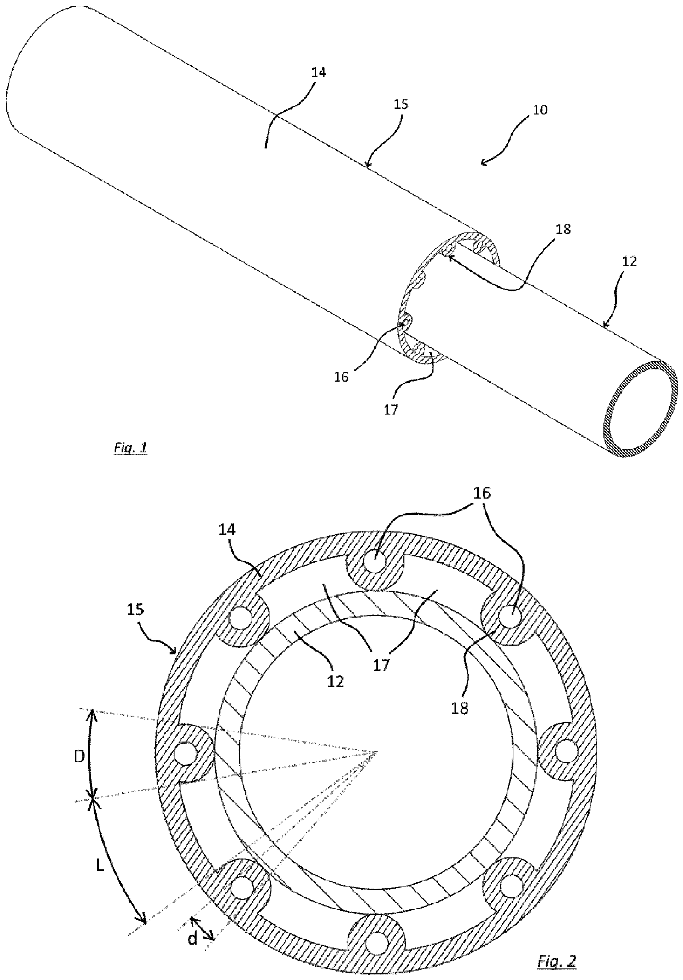

According to the variants shown in Figures 1-5, tubular portions 18 are parallel to a longitudinal axis of pipeline 10. In particular, tubular portions 18 are rectilinear. When pipeline 10 is rectilinear, and therefore its longitudinal axis is rectilinear as well, tubular portions 18 are also rectilinear. In the example, tubular portions 18 are parallel to outer and inner pipes 14, 12. In the examples shown herein, the longitudinal axis of pipeline 10, and particularly of inner and outer pipes 12, 14, is rectilinear. In particular, pipeline 10 is at least partly flexible, so that, in some operating conditions (e.g. in the vehicle), it 10 may be arranged with its longitudinal axis not perfectly rectilinear. For example, pipeline 10 may be arranged with its longitudinal axis at least partly curvilinear. Preferably, pipeline 10 is, in the absence of any external forces, substantially rectilinear.

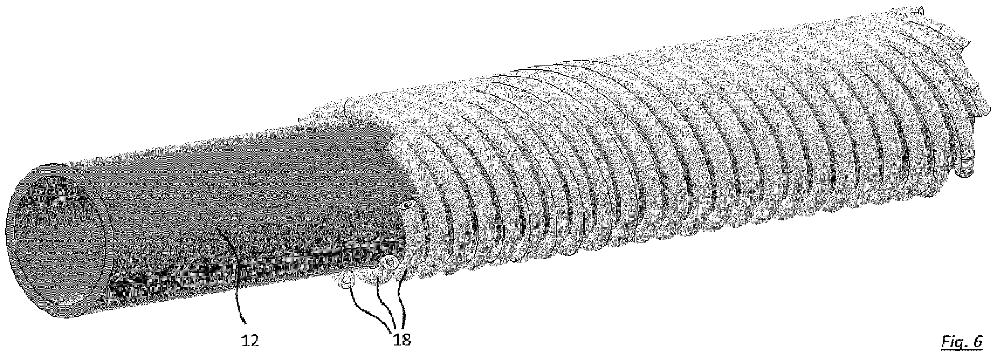

In the variants shown in Figures 6-11, on the other hand, tubular portions 18 are arranged in a spiral fashion relative to a longitudinal axis of pipeline 10. When pipeline 10 is rectilinear, and therefore its longitudinal axis is rectilinear as well, tubular portions 18 are arranged in a spiral fashion around the axis of pipeline 10. In the example, tubular portions 18 are arranged in a spiral fashion relative to outer and inner pipes 14, 12.

The fact that tubular portions 18 extend along the longitudinal direction of outer pipe 14 applies both to those variants wherein they 18 are rectilinear and to those variants wherein they 18 are arranged in a spiral fashion around the longitudinal axis of pipeline 10 (particularly around inner pipe 12).

The helical arrangement of tubular portions 18 is advantageous in larger pipelines 10 for the following reasons. As the diameter of pipeline 10 increases, width L of the arc of the portion of outer pipe 14 that separates two (rectilinear) tubular portions 18 may grow to a point where such portion of outer pipe 14 might collapse under its own weight and bend towards inner pipe 12. With helically wound tubular portions 18, no longitudinal "corridors" are created along which the arcs of width L are not supported, since the arcs, as large as they may be, will still be supported by the previous and next tracts of the spirals. Therefore, the spirals are useful to give stability to the arcs of width L of outer pipe 14, avoiding the need for increasing the number of tubular portions 18 (which constitute thermal bridges) as the diameter of pipeline 10 increases.

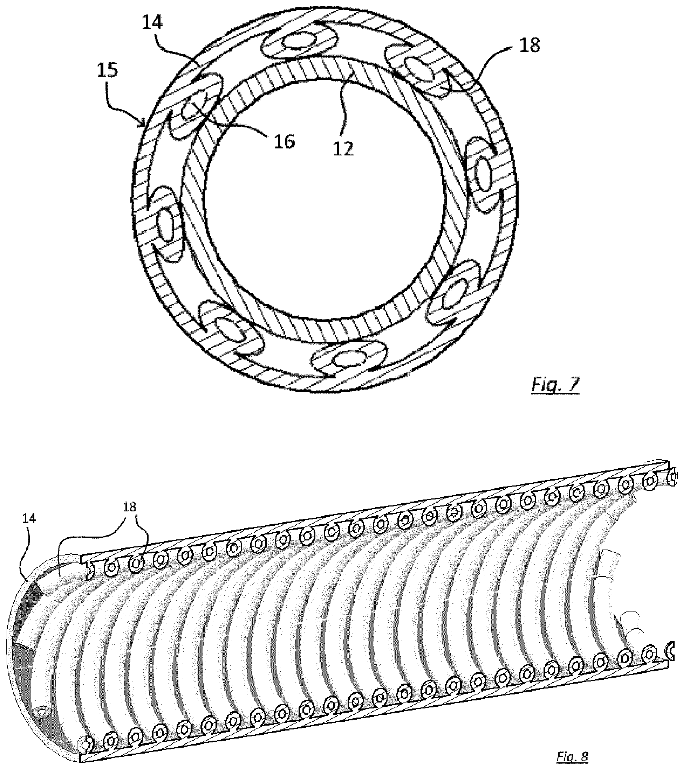

In the first variant with helical tubular portions 18 (Figs. 6-8), when viewed along a plane perpendicular to the direction of the spiral of a tubular portion, the cross-section of such tubular portion 18 is circular. Instead, when viewed perpendicularly to the longitudinal axis of pipeline 10 (Fig. 7), the cross-section of tubular portions 18 are not circular (but oval in this example). In the cross-sectional view of Figure 8 tubular portions 18 are not circular either.

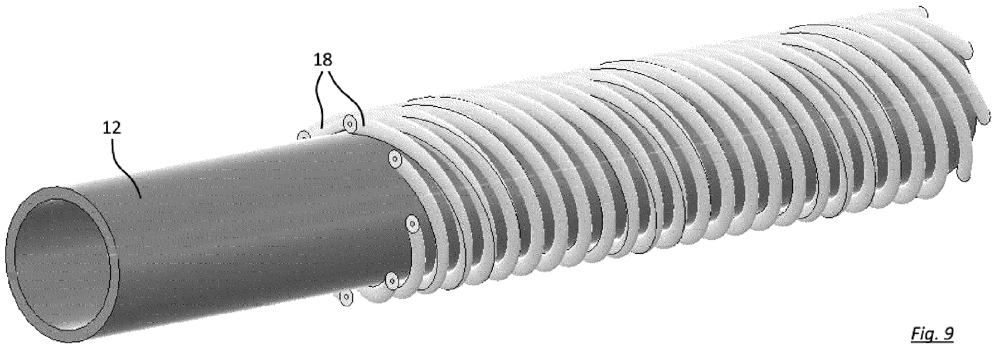

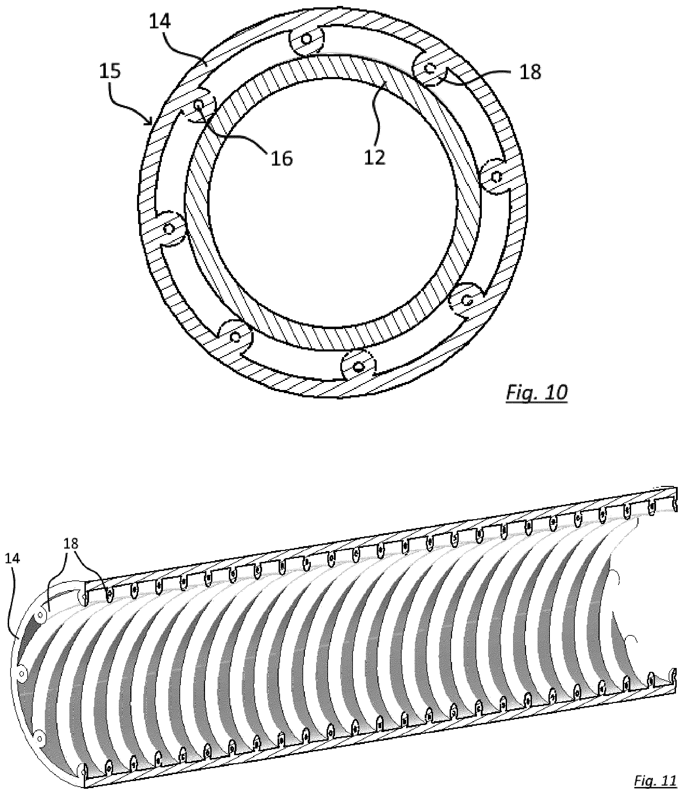

In the second variant with helical tubular portions 18 (Figs. 9-11), when viewed along a plane perpendicular to the longitudinal axis of pipeline 10 (Fig. 10), tubular portions 18 are circular. The cross-section of tubular portions 18 in Figure 11 is not circular. The differences between the two above-described variants derives from the production technique respectively employed, in particular by extrusion.

The invention also concerns a system for transporting a fluid, comprising:
- a pipeline 10 according to any variant; and
- a fluid source configured to supply a fluid to be transported, and fluidically connected to inner pipe 12 of pipeline 10.

The invention also concerns a motor vehicle equipped the said system.

The process for manufacturing a pipeline 10 for a fluid to be transported, in particular in a motor vehicle, comprises the following steps:
- providing an inner pipe 12 configured to be crossed by said fluid to be transported, and
- extruding, preferably in a continuous process, a sheath 15 around inner pipe 12, wherein sheath 15 comprises:
   - an outer pipe 14, and
   - a plurality of tubular portions 18 defining channels 16. Tubular portions 18: are radially interposed between inner pipe 12 and outer pipe 14, extend longitudinally along said outer pipe 14, are made as one piece with outer pipe 14, and are mutually spaced apart, thus forming interspaces 17.

The details of pipeline 10 have already been described, and will not therefore be repeated for brevity's sake.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Pipeline (10) for a fluid to be transported, in particular in a motor vehicle; said pipeline comprising:
- an inner pipe (12) configured to be crossed by said fluid to be transported, and
- a sheath (15) comprising:
- an outer pipe (14), and
- a plurality of tubular portions (18) defining channels (16) ;
wherein the tubular portions (18):
- are radially interposed between the inner pipe (12) and the outer pipe (14),
- extend longitudinally along said outer pipe (14),
- are made as one piece with the outer pipe (14),
- are mutually spaced apart, thus forming interspaces (17).

2. Pipeline according to claim 1, wherein the channels (16) and the interspaces (17) contain air.

3. Pipeline according to claim 1 or 2, wherein the sheath (15) is constructed around the inner pipe (12) by extrusion.

4. Pipeline according to any one of the preceding claims, wherein the width (L) of the interspaces (17) is greater than the width (D) of an outer surface of such tubular portions (18).

5. Pipeline according to any one of the preceding claims, wherein the tubular portions (18) are in contact with said inner pipe (12).

6. Pipeline according to any one of the preceding claims, wherein said channels (16) are arranged substantially circumferentially around said inner pipe (12).

7. Pipeline according to claim 6, wherein said channels (16) are substantially angularly equidistant from each other.

8. Pipeline according to any one of the preceding claims, wherein said channels (16) are closed at their axial ends.

9. Pipeline according to any one of the preceding claims, wherein the sheath (15) is made from an elastomer.

10. Pipeline according to claim 9, wherein said elastomer is a thermoplastic elastomer.

11. Pipeline according to any one of the preceding claims, wherein the inner pipe (12) is made of polymeric material.

12. Pipeline according to any one of the preceding claims, wherein the tubular portions (18) are parallel to a longitudinal axis of the pipeline (10).

13. Pipeline according to any one of the preceding claims from 1 to 11, wherein the tubular portions (18) are arranged in a spiral fashion relative to a longitudinal axis of the pipeline (10).

14. System for transporting a fluid, comprising:
- a pipeline (10) according to any one of the preceding claims; and
- a fluid source configured to supply a fluid to be transported, and fluidically connected to said inner pipe (12) of said pipeline (10).

15. Motor vehicle comprising a system according to claim 14.

16. Process for manufacturing a pipeline (10) for a fluid to be transported, in particular in a motor vehicle; comprising the following steps:
- providing an inner pipe (12) configured to be crossed by said fluid to be transported, and
- extruding a sheath (15) around the inner pipe (12), wherein the sheath (15) comprises:
- an outer pipe (14), and
- a plurality of tubular portions (18) defining channels (16);
wherein the tubular portions (18):
- are radially interposed between the inner pipe (12) and the outer pipe (14),
- extend longitudinally along said outer pipe (14),
- are made as one piece with the outer pipe (14),
- are mutually spaced apart, thus forming interspaces (17).

## Patentansprüche

1. Rohrleitung (10) für ein zu transportierendes Fluid, insbesondere in einem Kraftfahrzeug; die Rohrleitung umfasst:
- ein Innenrohr (12), das so ausgestaltet ist, dass es von dem zu transportierenden Fluid durchquert wird, und
- eine Hülle (15), die Folgendes umfasst:
- ein Außenrohr (14), und
- eine Vielzahl von röhrenförmigen Abschnitten (18), die Kanäle (16) definieren;
wobei die röhrenförmigen Abschnitte (18):
- radial zwischen dem Innenrohr (12) und dem Außenrohr (14) angeordnet sind,
- sich in Längsrichtung entlang des Außenrohrs (14) erstrecken,
- einstückig mit dem Außenrohr (14) gefertigt sind,
- voneinander beabstandet sind und so Zwischenräume (17) bilden.

2. Rohrleitung nach Anspruch 1, wobei die Kanäle (16) und die Zwischenräume (17) Luft enthalten.

3. Rohrleitung nach Anspruch 1 oder 2, wobei die Hülle (15) durch Extrusion um das Innenrohr (12) herum aufgebaut ist.

4. Rohrleitung nach einem der vorhergehenden Ansprüche, wobei die Breite (L) der Zwischenräume (17) größer ist als die Breite (D) einer Außenfläche derartiger rohrförmiger Abschnitte (18).

5. Rohrleitung nach einem der vorhergehenden Ansprüche, wobei die rohrförmigen Abschnitte (18) mit dem Innenrohr (12) in Kontakt stehen.

6. Rohrleitung nach einem der vorhergehenden Ansprüche, wobei die Kanäle (16) im Wesentlichen umlaufend um das Innenrohr (12) angeordnet sind.

7. Rohrleitung nach Anspruch 6, wobei die Kanäle (16) im Wesentlichen im gleichen Winkelabstand voneinander angeordnet sind.

8. Rohrleitung nach einem der vorhergehenden Ansprüche, wobei die Kanäle (16) an ihren axialen Enden geschlossen sind.

9. Rohrleitung nach einem der vorhergehenden Ansprüche, wobei die Hülle (15) aus einem Elastomer besteht.

10. Rohrleitung nach Anspruch 9, wobei das Elastomer ein thermoplastisches Elastomer ist.

11. Rohrleitung nach einem der vorhergehenden Ansprüche, wobei das Innenrohr (12) aus Polymermaterial besteht.

12. Rohrleitung nach einem der vorhergehenden Ansprüche, wobei die rohrförmigen Abschnitte (18) parallel zu einer Längsachse der Rohrleitung (10) verlaufen.

13. Rohrleitung nach einem der vorhergehenden Ansprüche 1 bis 11, wobei die rohrförmigen Abschnitte (18) spiralförmig relativ zu einer Längsachse der Rohrleitung (10) angeordnet sind.

14. System zum Transportieren eines Fluids, umfassend:
- eine Rohrleitung (10) nach einem der vorhergehenden Ansprüche; und
- eine Fluidquelle, die zum Liefern eines zu transportierenden Fluids ausgestaltet ist und fluidisch mit dem Innenrohr (12) der Rohrleitung (10) verbunden ist.

15. Kraftfahrzeug, umfassend ein System gemäß Anspruch 14.

16. Verfahren zur Herstellung einer Rohrleitung (10) für ein zu transportierendes Fluid, insbesondere in einem Kraftfahrzeug; umfassend die folgenden Schritte:
- Bereitstellen eines Innenrohrs (12), das so ausgestaltet ist, dass es von dem zu transportierenden Fluid durchquert wird, und
- Extrudieren einer Hülle (15) um das Innenrohr (12), wobei die Hülle (15) Folgendes umfasst:
- ein Außenrohr (14), und
- eine Vielzahl von röhrenförmigen Abschnitten (18), die Kanäle (16) definieren;
wobei die röhrenförmigen Abschnitte (18):
- radial zwischen dem Innenrohr (12) und dem Außenrohr (14) angeordnet sind,
- sich in Längsrichtung entlang des Außenrohrs (14) erstrecken,
- einstückig mit dem Außenrohr (14) gefertigt sind,
- voneinander beabstandet sind und so Zwischenräume (17) bilden.

## Revendications

1. Canalisation (10) pour un fluide à transporter, en particulier dans un véhicule à moteur ; ladite canalisation comprenant :
- un tuyau intérieur (12) configuré pour être traversé par ledit fluide à transporter, et
- une gaine (15), comprenant :
- un tuyau extérieur (14), et
- une pluralité de parties tubulaires (18) définissant des canaux (16) ;
dans laquelle les parties tubulaires (18) :
- sont interposées radialement entre le tuyau intérieur (12) et le tuyau extérieur (14),
- s'étendent longitudinalement le long dudit tuyau extérieur (14),
- sont réalisées d'un seul tenant avec le tuyau extérieur (14),
- sont mutuellement espacées, en formant ainsi des espaces intermédiaires (17).

2. Canalisation selon la revendication 1, dans laquelle les canaux (16) et les espaces intermédiaires (17) contiennent de l'air.

3. Canalisation selon la revendication 1 ou 2, dans laquelle la gaine (15) est construite autour du tuyau intérieur (12) par extrusion.

4. Canalisation selon l'une quelconque des revendications précédentes, dans laquelle la largeur (L) des espaces (17) est supérieure à la largeur (D) d'une surface extérieure de ces parties tubulaires (18).

5. Canalisation selon l'une quelconque des revendications précédentes, dans laquelle les parties tubulaires (18) sont en contact avec ledit tuyau intérieur (12).

6. Canalisation selon l'une quelconque des revendications précédentes, dans laquelle lesdits canaux (16) sont agencés sensiblement circonférentiellement autour dudit tuyau intérieur (12).

7. Canalisation selon la revendication 6, dans laquelle lesdits canaux (16) sont sensiblement angulairement à égale distance les uns des autres.

8. Canalisation selon l'une quelconque des revendications précédentes, dans laquelle lesdits canaux (16) sont fermés au niveau de leurs extrémités axiales (12).

9. Canalisation selon l'une quelconque des revendications précédentes, dans laquelle la gaine (15) est réalisée à partir d'un élastomère.

10. Canalisation selon la revendication 9, dans laquelle ledit élastomère est un élastomère thermoplastique.

11. Canalisation selon l'une quelconque des revendications précédentes, dans laquelle ledit tuyau intérieur (12) est constitué d'un matériau polymère.

12. Canalisation selon l'une quelconque des revendications précédentes, dans laquelle les parties tubulaires (18) sont parallèles à un axe longitudinal de la canalisation (10).

13. Canalisation selon l'une quelconque des revendications précédentes 1 à 11, dans laquelle les parties tubulaires (18) sont agencées en spirale par rapport à un axe longitudinal de la canalisation (10).

14. Système pour transporter un fluide, comprenant :
- une canalisation (10) selon l'une quelconque des revendications précédentes ; et
- une source de fluide, qui est configurée pour fournir un fluide à transporter et est reliée de manière fluidique audit tuyau intérieur (12) de ladite canalisation (10).

15. Véhicule à moteur comprenant un système selon la revendication 14.

16. Procédé pour fabriquer une canalisation (10) pour un fluide à transporter, en particulier dans un véhicule à moteur ; comprenant les étapes suivantes consistant à :
- fournir un tuyau intérieur (12) configuré pour être traversé par ledit fluide à transporter, et
- extruder une gaine (15) autour du tuyau intérieur (12), dans lequel la gaine (15) comprend :
- un tuyau extérieur (14), et
- une pluralité de parties tubulaires (18) définissant des canaux (16) ;
dans lequel les parties tubulaires (18) :
- sont interposées radialement entre le tuyau intérieur (12) et le tuyau extérieur (14),
- s'étendent longitudinalement le long dudit tuyau extérieur (14),
- sont réalisées d'un seul tenant avec le tuyau extérieur (14),
- sont mutuellement espacées, en formant ainsi des espaces intermédiaires (17).
